# EUROPÄISCHE PATENTANMELDUNG

(11) **EP 2 685 276 A2**
(43) Veröffentlichungstag der Anmeldung: **15.01.2014**
(21) Anmeldenummer: 13175676.9
(22) Anmeldetag: 09.07.2013
(51) Int. Cl.: G01S 7/02, G01S 13/86, G01S 13/42, G01D 11/02, H01Q 3/04, H01Q 1/12, F16M 11/10, F16M 11/18, F16M 11/20

(54) **Anordnung mit wenigstens einer drehbaren Funktionseinheit**

(30) Priorität: 13.07.2012 DE 202012102598 U
(71) Anmelder: Telefunken Radio Communication Systems GmbH & Co. KG, 89075 Ulm (DE)
(72) Erfinder: Plattner, Alfred, 89160 Dornstadt (DE); Dr. Egner, Peter, 79361 Sasbach a. Kaiserstuhl (DE); Partenhauser, Josef, 89075 Um (DE)
(74) Vertreter: Baur & Weber Patentanwälte

(57) **Zusammenfassung**

Die Erfindung betrifft eine Anordnung mit wenigstens einer ersten Funktions-einheit, welche relativ zu einer Basis um eine Drehachse drehbar ist, mit einer bezüglich der Drehachse auf der der Basis axial abgewandten Seite der ersten Funktionseinheit angeordneten Plattform sowie mit Koppelmitteln, welche eine Drehung der ersten Funktionseinheit um die Drehachse relativ zu der Basis umsetzen in eine gegensinnige Gegendrehung der Plattform relativ zu der ersten Funktionseinheit um die erste Drehachse.

## Beschreibung

Die Erfindung betrifft eine Anordnung mit wenigstens einer drehbaren Funktionseinheit.

Eine um eine Drehachse relativ zu einer Basis drehbare Funktionseinheit kann beispielsweise eine Sensoranordnung mit einem überwiegend radial von der Drehachse weg gerichteten Sensorbereich, insbesondere eine Kamera mit einem einen begrenzten Raumwinkel einnehmenden Sichtfeld sein. Durch Drehen der Funktionseinheit um die Drehachse in unterschiedliche Drehwinkelstellungen kann ein gegenüber dem Sensorbereich größerer Gesamtwinkelbereich erfasst werden.

Um auf der der Basis axial abgewandten Seite der Funktionseinheit eine von der Drehung der ersten Funktionseinheit entkoppelte Plattform, beispielsweise für eine weitere Funktionseinheit, anzuordnen, kann eine die erste Funktionseinheit im Bereich der Drehachse durchgreifende, Basis und Plattform starr miteinander verbindende Mittelstütze vorgesehen sein, welche aber den zentralen Bereich bei der Mittelachse für Komponenten der ersten Funktionseinheit blockiert. Wenn alternativ eine oder mehrere Stützen zwischen Basis und Plattform radial außerhalb des von der ersten Funktionseinheit beanspruchten Drehkreises angeordnet sind, so bewirken solche Stützen für einen Sensor der ersten Funktionseinheit bei der Drehung um die Drehachse eine Teilabschattung innerhalb des Gesamtwinkelbereichs um die Drehachse.

Der vorliegenden Erfindung liegt die Aufgabe zugrunde, eine Anordnung mit wenigstens einer um eine Drehachse relativ zu einer Basis drehbaren ersten Funktionseinheit und einer von dieser Drehung entkoppelten Plattform auf der der Basis axial abgewandten Seite der ersten Funktionseinheit anzugeben, bei welcher im axialen Abschnitt der ersten Funktionseinheit der zentrale Bereich um die Drehachse für Komponenten der ersten Funktionseinheit verfügbar ist und keine Teilabschattung für die erste Funktionseinheit auch mechanische axiale Verbindungen zwischen Basis und Plattform entstehen.

Die Erfindung ist im Anspruch 1 beschrieben. Die abhängigen Ansprüche enthalten vorteilhafte Ausgestaltungen und Weiterbildungen der Erfindung.

Gemäß der Erfindung wird eine Entkopplung der Plattform von der Drehung der ersten Funktionseinheit durch eine die Drehung der ersten Funktionseinheit kompensierende Gegendrehung der Plattform relativ zu der ersten Funktionseinheit erreicht.

In erster vorteilhafter Ausführung kann hierzu eine motorisch betriebene Dreheinrichtung vorgesehen sein, welche mit einer Steuerung zur Drehung der ersten Funktionseinheit um die Drehachse relativ zur Basis so gekoppelt ist, dass die Steuerung zeitgleich die genannte Dreheinrichtung so ansteuert, dass die Drehung der ersten Funktionseinheit relativ zur Basis für die Plattform kompensiert wird, so das die Ausrichtung der Plattform relativ zur Basis bei Drehung der ersten Funktionseinheit nicht verändert wird.

Vorzugsweise sind die Koppelmittel als passive, keine motorische Dreheinrichtung enthaltende mechanische Koppelmittel ausgeführt. Die mechanischen Koppelmittel stellen vorteilhafterweise eine mechanische Kopplung zwischen Basis und Plattform her und enthalten hierfür insbesondere wenigstens ein mechanisch kraftübertragendes Transferelement, welches in einem von der ersten Funktionseinheit eingenommenen axialen Abschnitt von der Drehachse beabstandet zwischen Basis und Plattform verläuft und zumindest in diesem Abschnitt mit der ersten Funktionseinheit bei deren Drehung mitgedreht wird. Durch die Mitdrehung kann das Transferelement in dem axialen Abschnitt so bezüglich Komponenten der ersten Funktionseinheit angeordnet werden, dass keine Abschattung auftritt, was durch die Mitdrehung bei beliebigen Drehwinkeln der ersten Funktionseinheit um die Drehachse erhalten bleibt.

Das Transferelement kann in bevorzugter Ausführung eine in der Funktionseinheit um eine Wellenachse drehbare Welle enthalten. Die Wellenachse verläuft zumindest annähernd parallel zur Drehachse und ist von dieser radial beabstandet. Die Welle, welche auch mehrteilig ausgeführt sein kann, steht mit ersten Koppelelementen auf Seiten der Basis und zweiten Koppelmitteln auf Seiten der Plattform in kraftübertragendem Eingriff, vorzugsweise über Zahngetriebeverbindungen in formschlüssigem Eingriff.

Die erste Funktionseinheit enthält in bevorzugter Ausführung wenigstens einen bildgebenden Sensor, insbesondere eine Kamera, mit einem einen begrenzten Raumwinkel einnehmenden Sichtfeld als Funktionsbereich, wobei das Sichtfeld in bevorzugter Ausführung einen im wesentlichen von der Drehachse radial weg gerichteten Winkelbereich enthalten kann.

Auf der Plattform ist gemäß einer bevorzugten Ausführung eine zweite Funktionseinheit angeordnet. Die zweite Funktionseinheit kann eine auf einen zweiten Raumwinkel begrenzte zweiten Funktionseinheit aufweisen und relativ zur Plattform verlagerbar sein, um die zweite Funktionseinheit veränderlich, vorzugsweise steuerbar motorisch, auszurichten. Die zweite Funktionseinheit kann insbesondere eine veränderlich ausrichtbare Radarantenne enthalten. Elektrische Signal- und Versorgungsverbindungen für die zweite Funktionseinheit können zwischen Basis und Plattform durch die erste Funktionseinheit hindurch geführt sein, wobei die Verbindungen insbesondere auch optische und/oder induktive Übertrager und/oder galvanisch-elektrische Schleifringe enthalten können.

Die Erfindung ist nachfolgend anhand bevorzugter Ausführungsbeispiele unter Bezugnahme auf die Abbildungen noch eingehend veranschaulicht. Dabei zeigt:
- Fig. 1: getrennte Baugruppen einer bevorzugten Ausführungsform der Erfindung,
- Fig. 2: eine aus den Komponenten nach Fig. 1 zusammen gebaute Anordnung,
- Fig. 3: ein Schema einer alternativen mechanischen Kopplung.

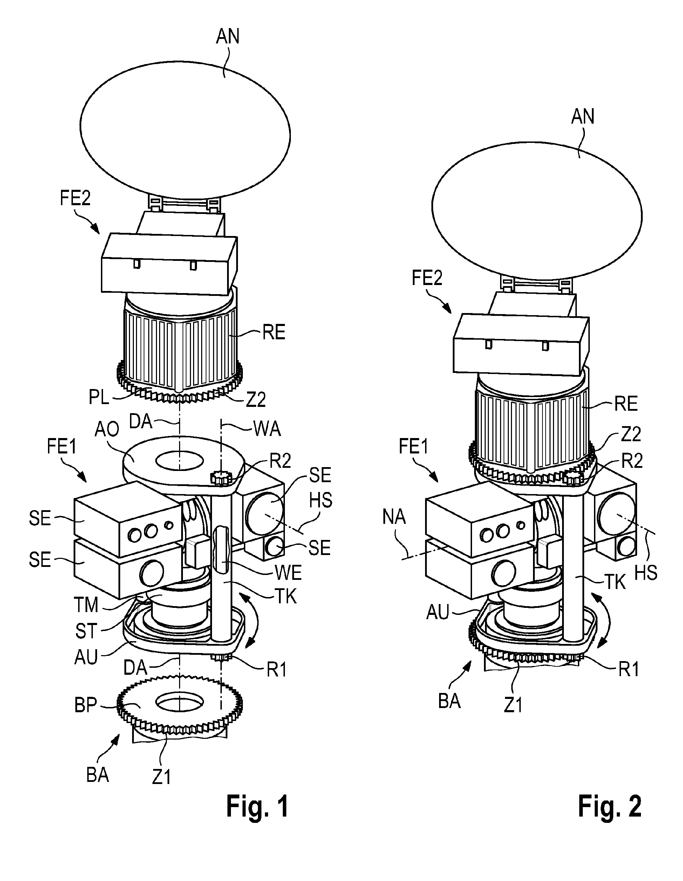

Fig. 1 zeigt Komponenten einer bevorzugten Ausführungsform der erfindungsgemäßen Anordnung, welche hierbei als eine Überwachungseinrichtung mit mehreren verschiedenen Sensoreinrichtungen ausgeführt ist. Zumindest ein Teil der Sensoreinrichtungen sei für eine veränderliche Ausrichtung um eine Drehachse DA über einen Winkel von mehr als 180°, vorzugsweise für eine Ausrichtung in im wesentlichen beliebige Winkelstellungen über volle 360° vorgesehen. Die Drehung um die Drehachse ist vorzugsweise ohne Anschlag über mehr als 360° in einer oder beiden Drehrichtungen ausführbar, insbesondere auch als in einer Drehrichtung beliebig kontinuierlich fortsetzbare Drehung. Die Drehachse DA kann, ohne Beschränkung der Allgemeinheit, bei einer bevorzugten Ausführung im Betrieb der Anordnung im wesentlichen vertikal ausgerichtet sein.

Eine Basis BA der Anordnung sei für die folgende weitere Beschreibung als ortsfest und konstant ausgerichtet angesehen, die Basis kann aber auch in sich und zusammen mit den anderen Komponenten mobil und/oder lageveränderlich sein. Insbesondere kann die Basis an einem Fahrzeug montiert sein und relativ zum Fahrzeug zwischen einer Betriebsstellung, beispielsweise mit erhöhter Positionierung der Sensoreinrichtungen einerseits und einer Transportstellung mit geschützter und abgedeckter Positionierung der Anordnung innerhalb eines Aufnahmeraums des Fahrzeugs andererseits verlagerbar sein.

Die in Fig. 1 dargestellten Baugruppen umfassen neben der Basis BA insbesondere eine erste Funktionseinheit FE1 und eine zweite Funktionseinheit FE2, welche entlang der Drehachse DA aufeinander folgend angeordnet sind und in dieser Aufeinanderfolge wie in Fig. 2 dargestellt auch zu der Anordnung zusammen gefügt werden. Die erste Funktionseinheit FE1 bilde beispielsweise ein Sensorsystem mit einer oder mehreren Sensoreinrichtungen SE als Funktionsgruppen. Als Sensoreinrichtungen des Sensorsystems seien dabei auch aktive Elemente, wie z. B. Beleuchtungseinrichtungen oder optische Objektmarkierungseinrichtungen, beispielsweise Laserzielmarkierer verstanden. Wenigstens einer Funktionsgruppe der ersten Funktionseinheit FE1 sei ein Wirkungsbereich, für welchen die Funktionsgruppe die ihr zugewiesene Funktion erfüllt, zugeordnet, wobei dieser Wirkungsbereich wenigstens einer Funktionsgruppe einen von der Funktionsgruppe weg gerichteten Raumwinkelbereich umfasse. Vorzugsweise ist die wenigstens eine Funktionsgruppe mit einem solchen von der ersten Funktionseinheit FE1 weg gerichteten Raumwinkel als Wirkungsbereich als ein Sensor für elektromagnetische Strahlung, vorzugsweise als bildgebender Sensor ausgebildet. Für den Wellenlängenbereich einer solchen Sensoreinrichtung zum Empfang elektromagnetischer Wellen kommt prinzipiell ein breites Spektrum vom UV-Bereich bis zum Mikrowellenbereich in Betracht. Eine Sensoreinrichtung kann auch zur Emission von elektromagnetischen Wellen, beispielsweise in Form von Laserstrahlung, ausgebildet sein. Vorteilhafterweise enthält das Sensorsystem der ersten Funktionseinheit FE1 mehrere auf unterschiedliche Teilbereiche des Spektrums elektromagnetischer Wellen ausgelegte und/oder unterschiedliche Ausschnitte der Umgebung erfassende Sensoreinrichtungen SE als Funktionsgruppen.

Die erste Funktionseinheit FE1 ist relativ zu der Basis BA um eine Drehachse DA drehbar, wobei für die Drehung vorzugsweise eine mit einem steuerbaren Motor ausgestattete Steuereinrichtung ST vorgesehen ist. Die Steuereinrichtung ST kann auch teilweise oder vollständig in die Basis BA integriert sein.

Eine oder mehrere der Sensoreinrichtungen SE der ersten Funktionseinheit FE1 können vorteilhafterweise um eine quer zur Drehachse DA verlaufende Neigungsachse NA verschwenkbar angeordnet sein, wodurch die Ausrichtung eines Wirkungsbereichs einer solchen Sensoreinrichtung veränderbar ist. Für eine Sensoreinrichtung ist die Ausrichtung des Wirkungsbereichs durch eine mittlere Richtung als Mittelachse HS eines begrenzten Raumwinkels repräsentiert. Vorzugsweise enthält die erste Funktionseinheit wenigstens einen Wirkungsbereich, welcher in wenigstens einer Neigungsstellung um die Neigungsachse NA eine Radialrichtung von der Drehachse DA weg einschließt.

Durch die Drehung der ersten Funktionseinheit FE1 um die Drehachse DA relativ zu der als feststehend angesehenen Basis BA können von der ersten Funktionseinheit FE1 weg gerichtete Wirkungsbereiche der einen oder mehreren Funktionsgruppen der ersten Funktionseinheit in unterschiedliche Winkelstellungen bezüglich der Basis BA um die Drehachse DA gebracht werden. Hierbei können mehrere diskrete Winkelausrichtungen vorgesehen sein. Vorzugsweise ist eine Ausrichtung kontinuierlich oder quasi-kontinuierlich um die Drehachse DA möglich.

Die erste Funktionseinheit FE1 kann in erster vorteilhafter Ausführung in beliebig fortgesetzter Drehung mit gleichbleibendem Drehsinn relativ zur Basis BA um die Drehachse DA drehbar sein, also insbesondere auch um das Vielfache einer vollständigen 360°-Drehung. Elektrische Verbindungen zwischen Sensoreinrichtungen SE als Funktionsgruppen oder Steuereinrichtung ST der ersten Funktionseinheit FE1 mit Einrichtungen auf Seiten der Basis BA können dann vorteilhafterweise über Schleifkontakte und/oder mittels nicht galvanischer Koppler vorgesehen sein.

In anderer vorteilhafter Ausführung kann die fortgesetzte gleichsinnige Drehung der ersten Funktionseinheit FE1 relativ zur Basis BA um die Drehachse DA auf einen endlichen Winkelbereich, welcher hierbei aber auch größer als 360° sein kann, begrenzt sein. In einem solchen Fall können elektrische Verbindungen auch durch Kabelverbindungen gegeben sein, welche eine solche begrenzte Verdrehung erlauben.

Die erste Funktionseinheit FE1 enthält einen formstabilen und starren Rahmen mit einer der Basis BA zu weisenden unteren Anschlussplatte AU und einer der Basis abgewandten oberen Anschlussplatte AO, wobei obere Anschlussplatte AO und untere Anschlussplatte AU axial bezüglich der Drehachse DA voneinander beabstandet und starr miteinander verbunden sind. Für die starre Verbindung sind im skizzierten Beispiel zwei bezüglich der Drehachse DA um 180° gegeneinander versetzt angeordnete Träger TK und TM vorgesehen. Die Ausbildung des starren Rahmens in Form der unteren Anschlussplatte AU, der oberen Anschlussplatte AO und der Träger TK ist nur schematisch zu verstehen. Ein solcher starrer Rahmen kann auf vielerlei unterschiedliche Weise realisiert sein. Insbesondere können auch die Funktionsgruppen und/oder die Steuereinrichtung ST der ersten Funktionseinheit Teile eines solchen starren Rahmen bilden. Die beispielhaft dargestellten Elemente des starren Rahmens seien im wesentlichen funktional verstanden. Insbesondere sind die Anschlussplatten AO, AU nicht notwendigerweise eben mit senkrecht dazu verlaufender Drehachse DA ausgebildet.

Die auf der der Basis BA bezüglich der Drehachse DA axial abgewandten Seite der ersten Funktionseinheit FE1 angeordnete Plattform PL ist relativ zu der ersten Funktionseinheit FE1 um die Drehachse DA drehbar, wobei Koppelmittel vorgesehen sind, welche bewirken, dass bei Drehung der ersten Funktionseinheit FE1 relativ zur Basis BA um die Drehachse DA synchron die Plattform PL relativ zur ersten Funktionseinheit gegensinnig gedreht ist, so dass die Plattform PL ihre Ausrichtung bezüglich der Basis BA auch bei Drehung der ersten Funktionseinheit FE1 um die Drehachse DA beibehält, dass also insbesondere die Plattform PL im wesentlichen nicht relativ zur Basis BA verdreht wird. Mit der Plattform PL verbunden ist eine zweite Funktionseinheit FE2, welche im skizzierten Beispiel als eine Radaranlage mit einer Radarsteuereinheit RE und einer Antenne AN ausgebildet sei. Die Radarsteuereinheit RE kann insbesondere elektronische Sende- und Empfangseinrichtungen für Radarsignale und Einrichtungen zur veränderlichen Ausrichtung der Hauptstrahlrichtung der Antenne AN relativ zur Plattform PL in Azimut und Elevation ausgebildet sein und kann hierfür auch eine eigene Motoranordnung enthalten, welche eine solche Lageveränderung der Hauptstrahlrichtung der Antenne relativ zur Plattform PL, insbesondere eine azimutale Drehung der Antenne AN bewirkt. Die azimutale Drehung der Antenne AN relativ zur Plattform PL ist entkoppelt von einer Drehung der ersten Funktionseinheit um die Drehachse DA. Die Antenne AN kann vorteilhafterweise in eine Nichtbetriebsstellung verlagerbar sein, um beispielsweise in einer Transport- oder Aufbewahrungsstellung ein geringes Volumen oder eine verbesserte mechanische Stabilität der Anordnung zu erreichen.

In erster, nicht dargestellter Ausführungsform kann eine Beibehaltung der relativen Position der Plattform PL bezüglich der Basis BA dadurch erreicht werden, dass Koppelmittel zwischen der ersten Funktionseinheit FE1 und der Plattform PL vorgesehen sind, welche mittels einer steuerbaren Motoranordnung bei einer Drehung der ersten Funktionseinheit FE1 relativ zur Basis BA um die Drehachse DA eine entgegen gerichtete, diese Drehung kompensierende Gegendrehung der Plattform PL relativ zur ersten Funktionseinheit FE1 ausführen und hierdurch verhindern, dass sich die Plattform PL um die Drehachse DA relativ zu der Basis BA dreht.

Vorzugsweise sind die Koppelmittel, welche die Beibehaltung der Position der Plattform PL relativ zur Basis BA bewirken, als passive mechanische Koppelmittel ausgebildet. Als passiv sei dabei zu verstehen, dass keine aktive Motoranordnung zwischen der ersten Funktionseinheit FE1 und der Plattform PL wirkt. Die passiven Koppelmittel wirken vorteilhafterweise zwischen der Basis BA und der Plattform PL und überbrücken hierfür mit wenigstens einem zur Übertragung von Kräften oder Drehmomenten ausgebildeten Transferelement axial die Funktionseinheit. Das Transferelement ist dabei bei einer Drehung der ersten Funktionseinheit FE1 um die Drehachse DA mit der ersten Funktionseinheit mit gedreht und im Axialbereich der ersten Funktionseinheit so angeordnet, dass die Wirkungsbereiche der einen oder mehreren Funktionsgruppen, insbesondere Raumwinkel von bildaufnehmenden Sensoreinrichtungen, durch das Transferelement nicht abgeschattet sind. Durch die Mitdrehung des Transferelements bei der Drehung der ersten Funktionseinheit bleibt die nicht abschattende Positionierung des Transferelements in der ersten Funktionseinheit erhalten und die Wirkungsbereiche der einen oder mehreren Funktionsgruppen der ersten Funktionseinheit sind in allen Drehrichtungen der ersten Funktionseinheit ungestört.

In der in Fig. 1 und Fig. 2 skizzierten bevorzugten Ausführungsform sind die passiven mechanischen Koppelmittel, welche eine Beibehaltung der Position der Plattform PL relativ zur Basis BA auch bei einer Drehung der ersten Funktionseinheit FE1 bewirken, in der Weise ausgeführt, dass sie als Transferelement eine Welle enthalten, welche um eine Wellenachse WA drehbar ist und an ihren entgegen gesetzten Enden in drehkoppelndem Eingriff mit weiteren Koppelelementen auf Seiten der Basis BA und auf Seiten der Plattform PL steht. Als drehkoppelnder Eingriff sei verstanden, dass durch diesen Eingriff, über welchen Kräfte und/oder Drehmomente übertragbar sind, eine Drehung des Transferelements um die Drehachse DA zwangsweise mit einer Drehung des Transferelements um seine eigene Wellenachse WA gekoppelt ist. Der Eingriff zwischen der Welle und den Koppelelementen auf Seiten der Basis BA und auf Seiten der Plattform PL ist vorzugsweise formschlüssig. Hierfür ist in der skizzierten bevorzugten Ausführung vorgesehen, dass die als Transferelement dienende Welle an ihren Enden eine erste Verzahnung R1 und eine zweite Verzahnung R2, nachfolgend als erstes Ritzel R1 und zweites Ritzel R2 bezeichnet, trägt. Ein auf Seiten der Basis BA vorgesehenes Koppelelement ist als die Drehachse DA umgebende Verzahnung Z1 und ein weiteres Koppelelement auf Seiten der Plattform PL als die Drehachse DA umgebende Verzahnung Z2, nachfolgend als erster Zahnkranz Z1 und zweiter Zahnkranz Z2 bezeichnet, ausgeführt. Im zusammen gebauten Zustand nach Fig. 2 greift das erste Ritzel R1 in den ersten Zahnkranz Z1 und das zweite Ritzel R2 in den zweiten Zahnkranz Z2 ein. Das Übertragungsverhältnis im ersten Verzahnungseingriff zwischen erstem Ritzel R1 und erstem Zahnkranz Z1 ist gleich dem Übertragungsverhältnis des zweiten Verzahnungseingriffs des zweiten Ritzels R2 in den zweiten Zahnkranz Z2. Die die beiden Ritzel R1 und R2 verbindende Welle ist vorteilhafterweise geschützt innerhalb des hierfür als Rohr oder Hohlprofil ausgeführten Trägers TK geführt und vorteilhafterweise in der unteren Anschlussplatte AU und der oberen Anschlussplatte AO um die Wellenachse WA drehbar gelagert. Die Wellenachse WA ist von der Drehachse DA radial beabstandet und verläuft im wesentlichen parallel zu dieser.

Die Durchmesser der beiden Ritzel R1, R2 sind vorzugsweise wesentlich kleiner als die Durchmesser der beiden Zahnkränze Z1, Z2, so dass die Welle als Transferelement mit deutlichem Abstand von der Drehachse DA angeordnet und hierdurch um die Drehachse viel Raum für die Funktionsgruppen der ersten Sensoreinrichtung verbleibt, ohne dass durch die Welle und die Ritzel der radiale Raumbedarf der ersten Funktionseinheit in Richtung des Transferelements nur um ein geringes Maß vergrößert wird. Die Zahnkränze Z1, Z2 umgeben vorzugsweise die Drehachse DA vollständig. Bei beschränkter Drehbarkeit der ersten Funktionseinheit FE1 auf einen Drehwinkelbereich von weniger als 360° können die Zahnkränze Z1, Z2 sich auch auf einen entsprechend reduzierten Winkel um die Drehachse DA beschränken. Die Zahnkränze Z1, Z2 können auch als Innenverzahnungen einer Ringfläche ausgeführt sein. Die Verzahnungseingriffe zwischen Ritzeln und Zahnkränzen können auch als Kegelverzahnungen ausgeführt sein.

Anstelle des Eingriffs von Ritzeln R1, R2 in Zahnkränze Z1, Z2 kann auch ein drehkoppelnder formschlüssiger Eingriff zwischen Koppelelementen auf Seiten der Basis BA und/oder auf Seiten der Plattform PL einerseits und formschlüssigen Strukturen an den Enden der Welle als Transferelement andererseits über ein verzahntes flexibles Zugelement, insbesondere eine Kette oder einen Zahnriemen vorgesehen sein, wofür Koppelelemente auf Seiten der Basis und/oder der Plattform und an den Transferelementen als mit einem solchen flexiblen Zugelement kraftübertragend zusammenwirkende Zahnkränze, Kettenräder, Zahnscheiben und dergleichen bekannte Elemente ausgeführt sein können.

Vorteilhafterweise ist genau ein Transferelement der beschriebenen Art vorgesehen, wodurch gegenüber der Verwendung mehrerer, um die Drehachse gegeneinander versetzt angeordneter Transferelemente eine mechanische Überbestimmung und ein Verklemmen verhindert ist. Das Transferelement kann auch mehrteilig ausgeführt sein. Anstelle von formschlüssigen Drehkopplungseingriffen der Koppelmittel können auch kraftschlüssige Eingriffe vorgesehen sein, wenn gewährleistet ist, dass diese zuverlässig eine Drehung der ersten Funktionseinheit FE1 relativ zur Basis in eine Gegendrehung der Plattform PL relativ zur ersten Funktionseinheit FE1 um die Drehachse DA bewerkstelligen.

In Fig. 1 und Fig. 2 ist mit HS für eine der Sensoreinrichtungen SE eine Mittelachse eines dieser Sensoreinrichtung als Wirkungsbereich zugeordneten Raumwinkelbereichs mit eingezeichnet. Die Mittelachse HS ist für größere Entfernungen von der ersten Funktionseinheit FE1 als im wesentlichen radial bezüglich der Drehachse verlaufend anzusehen. Die Mittelachse HS der Sensoreinrichtung wird bei Drehung der ersten Funktionseinheit FE1 um die Drehachse DA mit der ersten Funktionseinheit FE1 azimutal verschwenkt.

Zusätzlich kann vorgesehen sein, eine oder mehrere Funktionsgruppen innerhalb der ersten Funktionseinheit FE1 zusätzlich um eine bei als vertikal ausgerichtet angenommener Drehachse DA horizontale, senkrecht zur Drehachse DA verlaufende Kippachse KA verschwenkbar auszuführen, wobei eine Verschwenkung über die pauschal mit ST bezeichnete Steuereinrichtung erfolgen kann.

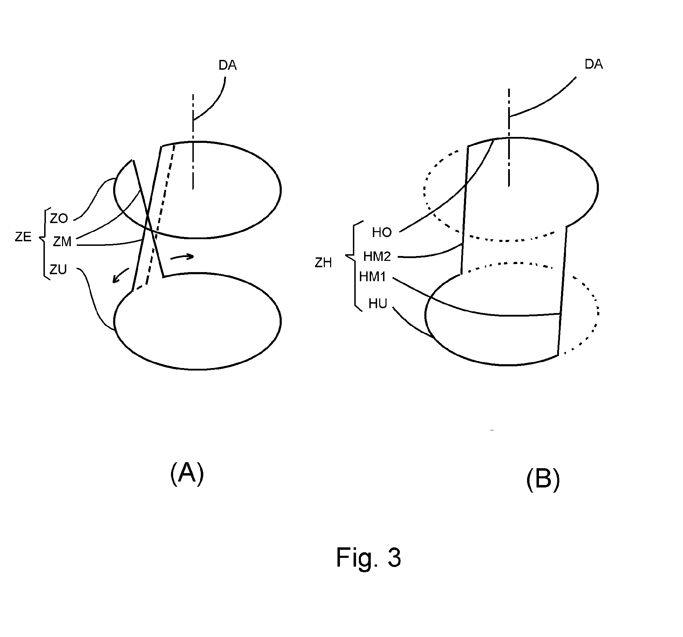

Fig. 3 zeigt schematisch zwei Beispiele einer alternativen Ausführung von mechanischen Koppelmitteln. Diese umfassen hierbei ein flexibles, zugfestes Zugelement ZE, welches in der Ausführung nach Fig. 3 (A) mit Mittelabschnitten ZM zwischen Umlenkpunkten UP einer Umlenkeinrichtung UE und einem oberen Abschnitt ZO und einem unteren Abschnitt ZU bogenförmig um die Drehachse DA verläuft. Das Zugelement ZE kann beispielsweise als ein über die Abschnitte ZO, ZU, ZM durchgehender Zahnriemen ausgeführt sein, welcher im Abschnitt ZU in eine erste Umlaufverzahnung auf Seiten der Basis BA entsprechend dem Zahnkranz ZA bzw. einer entsprechenden, die Drehachse DA umgebenden Riemenzahnscheibe und analog in einem oberen Abschnitt ZO in eine Riemenzahnscheibe der Plattform PL eingreift. Die mittleren Abschnitte ZM verlaufen in der Umlenkeinrichtung UE überkreuzt und überwiegend in axialer Richtung der Drehachse DA. Die Umlenkeinrichtung UE ist fest an die Drehung der ersten Funktionseinheit gekoppelt, so dass die überkreuzenden mittleren Abschnitte ZM des Zugelements in dieser Ausführung das Transferelement bilden. Durch die unterbrochene Linie ist der Verlauf eines der mittleren Abschnitte ZM bei Verdrehung der ersten Funktionseinheit um die Drehachse DA angedeutet. Hierbei wird jeweils ein Längeninkrement des Zugelements von einem mittleren Abschnitt auf die untere Zahnriemenscheibe neu aufgelegt und gleichzeitig ein gleich großes Inkrement von der oberen Zahnriemenschiebe abgenommen, was analog auch für den zweiten mittleren Abschnitt des Zugelements in umgekehrter Weise gilt, so dass bei Drehung der Umlenkeinrichtung UE gemeinsam mit der ersten Funktionseinheit FE1 um die Drehachse DA die bogenförmig in oberen bzw. unteren Riemenzahnscheiben einliegenden bogenförmigen Abschnitte ZO, ZU des Zugelements positionsstabil verharren und somit die Plattform PL ihre Ausrichtung relativ zur Basis beibehält.

Fig. 3 (B) zeigt eine Ausführung mit einem flexiblen Zugelement ZH ohne Überkreuzung in Mittelabschnitten. Das Zugelement umschlingt hierbei mit einem oberen Abschnitt HO und einem unteren Abschnitt HU kreisförmige Strukturen auf Seiten der zweiten Funktionseinheit bzw. auf Seiten der Basis über ca. 180°. Zwei Mittelabschnitte HM1, HM2 des Zugelements sind um ca. 180° um die Drehachse DA gegeneinander versetzt angeordnet und verlaufen annähernd parallel zur Drehachse DA. Die Mittelabschnitte können vorteilhafterweise durch Träger TK, TM wie in Fig. 1 und Fig. 2 vorgesehen hindurchgeführt sein.

Das flexible Zugelement kann für eine in gleichbleibendem Drehsinn nicht begrenzte Drehbarkeit der in Fig. 3 lediglich durch die Umlenkeinrichtung UE repräsentierten ersten Funktionseinheit um die Drehachse als geschlossenes endloses Zugelement ausgeführt und vorzugsweise über eine Spanneinrichtung aufgespannt sein. Bei in gleichbleibendem Drehsinn begrenztem Drehwinkel für die erste Funktionseinheit kann das flexible Zugelement auch als ein Strang mit zwei festgelegten Enden oder in Form zweier Stränge vorliegen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Anordnung mit wenigstens einer ersten Funktionseinheit (FE1), welche relativ zu einer Basis (BA) um eine Drehachse (DA) drehbar ist, mit einer bezüglich der Drehachse (DA) auf der der Basis (BA) axial abgewandten Seite der ersten Funktionseinheit (FE1) angeordneten Plattform (PL) sowie mit Koppelmitteln, welche eine Drehung der ersten Funktionseinheit (FE1) um die Drehachse (DA) relativ zu der Basis (BA) umsetzen in eine gegensinnige Gegendrehung der Plattform (PL) relativ zu der ersten Funktionseinheit (FE1) um die erste Drehachse (DA).

2. Anordnung nach Anspruch 1, **dadurch gekennzeichnet, dass** die Koppelmittel eine Motoranordnung umfassen, welche zur Drehung der Plattform (PL) relativ zu der ersten Funktionseinheit (FE1) ausgebildet ist.

3. Anordnung nach Anspruch 1, **dadurch gekennzeichnet, dass** die Koppelmittel als passiv mechanische Koppelmittel (R1, R2, Z1, Z2, WE) ausgebildet sind.

4. Anordnung nach Anspruch 3, **dadurch gekennzeichnet, dass** die Koppelmittel ein die erste Funktionseinheit axial überbrückendes, kraftübertragendes Transferelement (R1, R2, WE) enthalten.

5. Anordnung nach Anspruch 4, **dadurch gekennzeichnet, dass** die Koppelmittel eine erste Wirkfläche (Z1) auf Seiten der Basis (BA) und eine zweite Wirkfläche (Z2) auf Seiten der Plattform (PL) enthalten, welche mit dem Transferelement (R1, R2) in Eingriff stehen und die Drehachse (DA) bogenförmig zumindest teilweise umgeben und bezüglich der Basis (BA) bzw. der Plattform (PL) unverdrehbar sind.

6. Anordnung nach Anspruch 5, **dadurch gekennzeichnet, dass** das Transferelement eine an der ersten Funktionseinheit (FE1) mit ihrer Wellenachse (WA) von der Drehachse (DA) radial beabstandet gehaltene Welle (WE) enthält, welche gemeinsam mit der ersten Funktionseinheit (FE1) relativ zur Basis (BA) und zur Plattform (PL) um die Drehachse (DA) drehbar ist und mit der ersten und/oder der zweiten Wirkfläche (Z1, Z2) so gekoppelt ist, dass eine Drehung der ersten Funktionseinheit (FE1) um die Drehachse (DA) mit einer Eigendrehung der Welle (WE) um ihre Wellenachse (WA) verbunden ist.

7. Anordnung nach Anspruch 6, **dadurch gekennzeichnet, dass** die Welle (WE) mit der ersten und/oder der zweiten Wirkfläche (Z1, Z2) über einen Zahngetriebeeingriff (R1, Z1; R2, Z2) formschlüssig drehgekoppelt ist.

8. Anordnung nach Anspruch 7, **dadurch gekennzeichnet, dass** die erste und/oder die zweite Wirkfläche (Z1, Z2) einen Zahnkranz oder Zahnbogen um die Drehachse (DA) bildet.

9. Anordnung nach Anspruch 8, **dadurch gekennzeichnet, dass** das Transferelement wenigstens ein zwischen Basis (BA) und Plattform (PL) durchgehendes flexibles Zugelement (ZE) enthält, welches in einer mit der ersten Funktionseinheit (FE1) um die Drehachse (DA) drehbaren und von der Drehachse (DA) radial beabstandeten Umlenkeinrichtung (UE) in einen Verlauf zwischen Basis (BA) und Plattform (PL) umgelenkt ist.

10. Anordnung nach einem der Ansprüche 1 bis 9, **dadurch gekennzeichnet, dass** die erste Funktionseinheit (FE1) wenigstens einen ersten Funktionsbereich in Form eines von der ersten Funktionseinheit weg weisenden Raumwinkelbereichs um eine Hauptrichtung (HS) besitzt, welcher bei Drehung der ersten Funktionseinheit um die Drehachse mitgedreht ist.

11. Anordnung nach Anspruch 10, **dadurch gekennzeichnet, dass** die erste Funktionseinheit (FE1) wenigstens einen bildgebenden Strahlungsempfänger (SE) mit einem Sichtfeld als Funktionsbereich enthält.

12. Anordnung nach einem der Ansprüche 1 bis 11, **dadurch gekennzeichnet, dass** eine zweite Funktionseinheit (FE1) auf der Plattform (PL) angeordnet ist.

13. Anordnung nach Anspruch 12, **dadurch gekennzeichnet, dass** die zweite Funktionseinheit (FE2) einen gerichteten zweiten Funktionsbereich besitzt, dessen Ausrichtung relativ zur Plattform veränderlich steuerbar ist.

14. Anordnung nach Anspruch 13, **dadurch gekennzeichnet, dass** der gerichtete zweite Funktionsbereich der zweiten Funktionseinheit (FE2) motorisch relativ zur Plattform (PL) um die Drehachse (DA) drehbar ist.

15. Anordnung nach einem der Ansprüche 12 bis 14, **dadurch gekennzeichnet, dass** die zweite Funktionseinheit (FE2) eine Radarantenne (AN) enthält.
